# EUROPÄISCHE PATENTSCHRIFT

(11) **EP 1 390 657 B1**
(45) Veröffentlichungstag und Bekanntmachung des Hinweises auf die Patenterteilung: **25.03.2009**
(21) Anmeldenummer: 02740341.9
(22) Anmeldetag: 11.05.2002
(51) Int. Cl.: F16L 39/04

(54) **DREHDURCHFÜHRUNG FÜR FLUIDSYSTEME**
ROTARY TRANSMISSION LEADTHROUGH FOR FLUID SYSTEMS
PASSAGE TOURNANT POUR SYSTEMES FLUIDIQUES

(30) Priorität: 29.05.2001 DE 10125991
(43) Veröffentlichungstag der Anmeldung: 25.02.2004
(73) Patentinhaber: Tries GmbH & CO. KG, 89584 Ehingen (DE)
(72) Erfinder: TRIES, Manfred, 89584 Ehingen (DE); AMBROSIUS, Frank, 89614 Öpfingen (DE)
(74) Vertreter: Roth, Klaus
(86) Internationale Anmeldenummer: PCT/DE2002/001705
(87) Internationale Veröffentlichungsnummer: WO 2002/097318

(56) Entgegenhaltungen:
- DE-A- 4 318 060
- DE-U- 1 782 490
- US-A- 1 788 500

## Beschreibung

Die Erfindung betrifft eine Drehdurchführung für Fluidsysteme nach dem Oberbegriff des Anspruchs 1. Solch eine Drehdurchführung ist beispielsweise aus der DE-U 1782490 bekannt.

In Fluidsystemen, insbesondere in Maschinen oder Fahrzeugen mit Hydraulikantrieb werden Drehdurchführungen verwendet, um Fluidkanäle zwischen zueinander beweglichen Bauteilen sicherzustellen. Solche Fluidsysteme finden beispielsweise bei Baumaschinen oder Landmaschinen Anwendung.

Bekannte Drehdurchführungen werden unter anderem eingesetzt, um bei geländegängigen Fahrzeugen mit Hydraulikantrieb eine Verschränkung zwischen der Vorder- und der Hinterachse zu ermöglichen, da die beiderseitigen Anschlüsse einer solchen Drehdurchführung die gegenseitige Verdrehung um eine Drehachse erlauben.

Bisherige Geländefahrzeuge können dem Verlauf eines kupierten Geländes nur bedingt folgen, da bei einer zu starken Änderung des Neigungswinkels das Fahrzeug entweder am Boden aufsitzt oder aber bei ausreichender Geschwindigkeit die Laufräder einer Achse vom Boden abheben. Bekannte Drehdurchführungen bestehen in der Regel aus zwei wenigstens teilweise ineinander gesteckten Drehelementen, wovon eines als Stator und das andere als Rotor bezeichnet wird. Das als Stator bezeichnete Drehelement ist hierbei bezogen auf das Bezugssystem, beispielsweise einen Maschinenrahmen ortsfest, während das als Rotor bezeichnete Drehelement bezüglich diesem Bezugssystem verdrehbar ist. Im Folgenden wird die Bezeichnung Stator und Rotor lediglich zur Unterscheidung zweier Drehelemente verwendet, wobei je nach Bezugssystem das als Stator bezeichnete Drehelement nicht statisch fixiert sein muss.

Die Fluidleitungen werden hierbei über Außen- bzw. Innennuten des Stators und/oder des Rotors geführt und weisen demnach die Form einer Ringnut oder einer Ringsegmentnut auf. Durch eine solche Drehdurchführung können viele verschiedene Fluidleitungen, z.B. für Hydrauliköl, Pressluft, Treibstoff, usw. geführt werden.

Aufgabe der Erfindung ist es, eine Drehdurchführung vorzuschlagen, mittels der die Beweglichkeit eines Fluidsystems, insbesondere eines Hydrauliksystems erhöht und somit neue Anwendungsgebiete erschlossen werden.

Diese Aufgabe wird ausgehend von einer Drehdurchführung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend wird bei einer erfindungsgemäßen Drehdurchführung wenigstens ein weiterer Rotor vorgesehen, der wenigstens teilweise zu einem Teil des Stators koaxial und zu diesem um eine zweite, von der ersten Drehachse des ersten Rotors verschiedene Drehachse drehbar ist.

Hierdurch ergibt sich eine Drehdurchführung, die für das zugehörige Fluidsystem neue Anwendungsmöglichkeiten erschließt. So kann beispielsweise im Falle eines Hydrauliksystems für geländegängige Fahrzeuge nicht nur die Verschränkung der Achsen, sondern eine Schwenkbewegung zwischen dem Vorder- und der Hinterteil des Fahrzeugs vorgesehen werden. So kann beispielsweise in einem solchen Fahrzeug ein Knickgelenk vorgesehen werden, das ein Knicken des Fahrzeugs um eine horizontale Drehachse erlaubt. Ein solches Fahrzeug ist in der Lage, auch in extrem kupiertem Gelände der Bodenkontur zu folgen, ohne dass das Fahrzeug auf dem Boden aufliegt oder die Laufräder vom Boden abheben.

In einer anderen Ausführungsform kann eine erfindungsgemäße Drehdurchführung auch dadurch verwendet werden, neben dem Verschränken der Laufräder auch Lenkbewegungen zweier Achsen zueinander zu ermöglichen, wie dies bei sogenannten Knicklenkungen der Fall ist. Derartige Fahrzeuge knicken beim Lenken um eine vertikale Drehachse ein und sind erheblich wendiger als Fahrzeuge mit herkömmlichen Radlenkungen.

Eine erfindungsgemäße Drehdurchführung kann als zentrale Baueinheit für eine Vielzahl von Fluidleitungen angebracht werden und ist in der Lage, die erforderliche Beweglichkeit der Fluidleitungen dauerhaft dichtend auch bei hohen Arbeitsdrücken zu gewährleisten.

In einer Weiterbildung der Erfindung wird der Stator mehrteilig aufgebaut. Hierdurch wird die Fertigung und Montage einer erfindungsgemäßen Drehdurchführung erheblich erleichtert. Insbesondere ergibt sich eine größere Gestaltungsfreiheit für konstruktive Detaillösungen bei einer erfindungsgemäßen Drehdurchführung. Darüber hinaus ist eine derartige Drehdurchführung auch wartungs- und reparaturfreundlicher, da sie teilweise am Einsatzort zerlegbar ist und eine Reparatur durch Austausch einzelner Stator-Ersatzteile möglich ist.

Da derartige mehrteilige Statoren auch hohen Arbeitsdrücken im montierten Zustand standhalten müssen, ist eine dichte Verbindung zwischen den einzelnen Teilen zwingend erforderlich. Hierbei haben sich Flanschverbindungen mit entsprechenden Dichtflächen und Einlegedichtungen bewährt. Darüber hinaus können an einem derartigen Flansch zugleich Halteelemente zur Befestigung der erfindungsgemäßen Drehdurchführung am Einsatzort angebracht werden.

In einer besonderen Ausführungsform der Erfindung werden der erste und der zweite Rotor wenigstens teilweise hülsenförmig ausgebildet, so dass sie das entsprechende Gegenstück des Stators umschließen können. Dies entspricht der Bauform bekannter Drehdurchführungen und bietet insbesondere den Vorteil, verschiedene Fluidanschlüsse außen am Rotor in unterschiedlicher axialer Position anzubringen. Grundsätzlich ist jedoch auch die umgekehrte Bauform denkbar, d.h. eine hülsenförmige Ausgestaltung des Stators, wobei in diesem Fall ein oder beide Rotoren als Innenteil in einen solchen Stator eingebracht werden müssen.

In einer weiteren vorteilhaften Ausführungsform der Erfindung wird ein dritter Rotor vorgesehen. Ein solcher dritter Rotor kann dabei um eine dritte Drehachse drehbar angeordnet werden. Dabei kann der dritte Rotor je nach Anwendungsfall entweder mit dem oben genannten Stator drehbar verbunden werden oder aber mit einem der beiden vorgenannten Rotoren. Zur Verbindung des dritten Rotors mit einem der beiden vorgenannten Rotoren, muss derjenige Rotor mit einem Teil versehen werden, das als Stator für den dritten Rotor ausgebildet ist, der die durchzuführenden Leitungen beinhaltet. Eine solche Bauform bringt einen zusätzlichen Freiheitsgrad in der Verdrehbarkeit der Drehdurchführung mit sich, so dass beispielsweise ein geländegängiges Fahrzeug mit einer so ausgebildeten Drehdurchführung eine Verschränkung der Achsen, eine Knicklenkung und zugleich eine Bodenanpassung durch ein Knickgelenk um eine horizontale Achse ermöglicht.

Dabei stellt die erfindungsgemäße Drehdurchführung nach wie vor eine als Ganzes handzuhabende Baueinheit mit den sich dadurch ergebenden Vorteilen hinsichtlich der Montage, der Reparatur sowie der Anzahl der erforderlichen Teile dar.

Der dritte Rotor kann jedoch auch so ausgebildet sein, dass er um die gleiche Drehachse drehbar angeordnet ist, wie einer der beiden vorgenannten Rotoren. In diesem Fall ermöglicht der dritte Rotor eine größere Freiheit in der räumlichen Ausgestaltung einer erfindungsgemäßen Drehdurchführung. Bei einer Drehdurchführung für Fluidsysteme werden, wie oben angeführt, in der Regel sehr viele Fluidleitungen drehbar miteinander gekoppelt. Die entsprechenden Kanäle im Rotor bzw. im Stator sind hierbei axial voneinander ringförmig oder ringsegmentförmig angeordnet. Sofern die Länge eines Rotors sowie des dazugehörigen Statorteils aus konstruktiven Gründen beschränkt ist, kann durch das Anbringen eines weiteren Rotors die zuverlässige Durchführung weiterer Fluidkanäle gewährleistet werden.

Darüber hinaus kann unter Beibehaltung einer hohen Anzahl von Fluidkanälen eine je nach Anwendungsfall günstiger Gewichtsverteilung mit Hilfe eines weiteren dritten Rotors erzielt werden. Wird beispielsweise in einer vorteilhaften Ausführungsform ein zweiter und ein dritter Rotor, die beidseits eines Stators angeordnet sind, mit dem ersten Rotor kreuz bzw. T-förmig kombiniert, so ergibt sich eine Schwerpunktslage in der Nähe der Mittelachse der Drehdurchführung in Längsrichtung des ersten Rotors. Eine solche Gewichtsverteilung ist beispielsweise beim Einsatz in Fahrzeugen von Vorteil, um ein ausgewogenes Fahrverhalten in Kurven oder in Hanglage zu gewährleisten.

In einer besonderen Ausführungsform einer Fluiddurchführung gemäß der Erfindung wird zudem eine Leckfluidrückführung, z.B. für Lecköl, in die Drehdurchführung integriert. Dies ist generell bei allen Arten von Hydrauliksystemen von Vorteil, da die Außendichtigkeit der Drehdurchführung durch diese Maßnahme deutlich verbessert wird.

Insbesondere bei einem Einsatz in einem Fahrzeug ist die Außendichtigkeit von besonders großer Bedeutung, da hierdurch nicht nur das äußere Erscheinungsbild der Drehdurchführung betroffen ist, sondern auch die Ölverluste deutlich reduziert, wenn nicht ganz vermieden werden. Ölverluste sind bei Fahrzeugen vor allem aus Gründen der Umweltkontamination unerwünscht. Darüber hinaus müssen übermäßige Ölverluste im Ölvorrat regelmäßig ergänzt werden.

Vorteilhafterweise werden eine oder mehrere Leckfluidrückführungen im Bereich der Drehdurchführung zwischen einer Druckleitung und dem Außenbereich vorgesehen. Durch die drucklose Leckfluidrückführung werden gewissermaßen druckführende Leitungen weiter im Innern der Drehdurchführung nach außen hin abgeschirmt. Die Außendichtigkeit der Drehdurchführung ist bei dieser Anordnung letztendes nur noch zwischen der drucklosen Leckfluidleitung und der äußeren Umgebung herzustellen. Die Abdichtung einer drucklosen Leitung lässt sich jedoch erheblich einfacher und besser realisieren, als dies bei Hochdruckleitungen der Fall ist.

Ein Ausführungsbeispiel der Erfindung ist in der Zeichnung dargestellt und wird anhand der Figuren nachfolgend näher erläutert.

Im Einzelnen zeigen
- Figur 1: einen Längsschnitt durch eine Drehdurchführung für ein Fluidsytsem und
- Figur 2: eine Draufsicht auf eine erfindungsgemäße Drehdurchführung.

Die Drehdurchführung 1 umfasst hierbei zwei Drehteile, einen Stator 2 und einen Rotor 3. Der Stator 2 ist mit einem Flansch 4 versehen, mittels dem die Drehdurchführung am Einsatzort zu befestigen ist.

Der Rotor 3 ist hülsenförmig ausgebildet und auf den Stator 2 aufgeschoben. Somit ist der Rotor 3 bezüglich der Drehachse D gegenüber dem Stator 2 drehbar.

Am Rotor 3 sind verschiedene Anschlüsse 5 bis 10 angebracht, die in nicht näher dargestellter Weise in verschiedene Ringnuten 11 bis 19 des Rotors 3 münden. Die Ringnuten 11 bis 3 sind mit Hilfe von Dichtungen 20 bis 31 untereinander und gegenüber der äußeren Umgebung abgedichtet. Jede der Ringnuten 11 bis 19 ist über achsenparallel verlaufende Bohrungen im Stator 2 sowie entsprechende radiale Bohrungen im Endbereich des Stators 2 fortgesetzt. Beispielhaft sind die achsenparallelen Bohrungen 32 und 33 dargestellt, die mit den jeweils zugehörigen Radialbohrungen 34 und 35 über den Stator 2 nach außen geführt sind.

Das dargestellte Ausführungsbeispiel zeigt, wie mehrere Leitungen mit unterschiedlich großem Querschnitt durch eine Drehdurchführung geführt sind. So ist beispielsweise der Anschluss 5 des Rotors 3 mit der Ringnut 12 verbunden. Unabhängig von der Winkelstellung des Rotors 3 im Bezug zum Stator 2 ergibt sich somit eine Verbindung zwischen dem Anschluss 5 und der achsenparallelen Bohrung 32 und somit zur Radialbohrung 34. Die Radialbohrung 34 kann beispielsweise über ein Innengewinde als statorseitiger Außenanschluss verwendet werden. Auf die gleiche Weise wird der Anschluss 9 über die Ringnut 15, die achsenparallele Bohrung 33 sowie die Radialbohrung 35 unabhängig von der Winkelstellung des Rotors 3 im Bezug zum Stator 2 durchgeführt.

Die Außenabdichtung einer solchen Drehdurchführung kann vorteilhafterweise dadurch verbessert werden, dass eine Leckölrückführung derart vorgesehen ist, dass die hochdruckführenden Kanäle nach außen hin durch die Leckölrückführung abgeschirmt sind. In Hydrauliksystemen sind durchaus Drücke in der Größenordnung von einigen hundert bar vorhanden. Sind beispielsweise im vorliegenden Fall die Hochdruckleitungen über die Ringnuten 16, 17, 18, an verschiedene Hochdruckpumpen, z.B. eine Kranhydraulikpumpe, eine Drehwerkpumpe und eine Hilfspumpe angeschlossen, so wird vorteilhafterweise im Außenbereich hierzu, z.B. in der benachbarten Ringnut 15 eine Leckölrückführung vorgesehen, um dorthin eindringendes Lecköl aus den Druckleitungen abzufangen. Die weiter außen anschließenden Leitungen können für Niederdruckkanäle Verwendung finden, beispielsweise für ein oder mehrere Druckluft- oder Treibstoffleitungen.

Auf der anderen Seite der Hochdruckleitungen 16, 17, 18 ist mit einem großen Querschnitt eine Hydraulikölrücklaufleitung 19 angeordnet, die ebenfalls eine Niederdruckleitung darstellt und zugleich als Leckölrückführung dienen kann.

Durch die Abschirmung von Hydraulikhochdruckleitungen mit Hilfe von Leckölrückführungsleitungen wird die Außendichtigkeit der Drehdurchführung entscheidend verbessert.

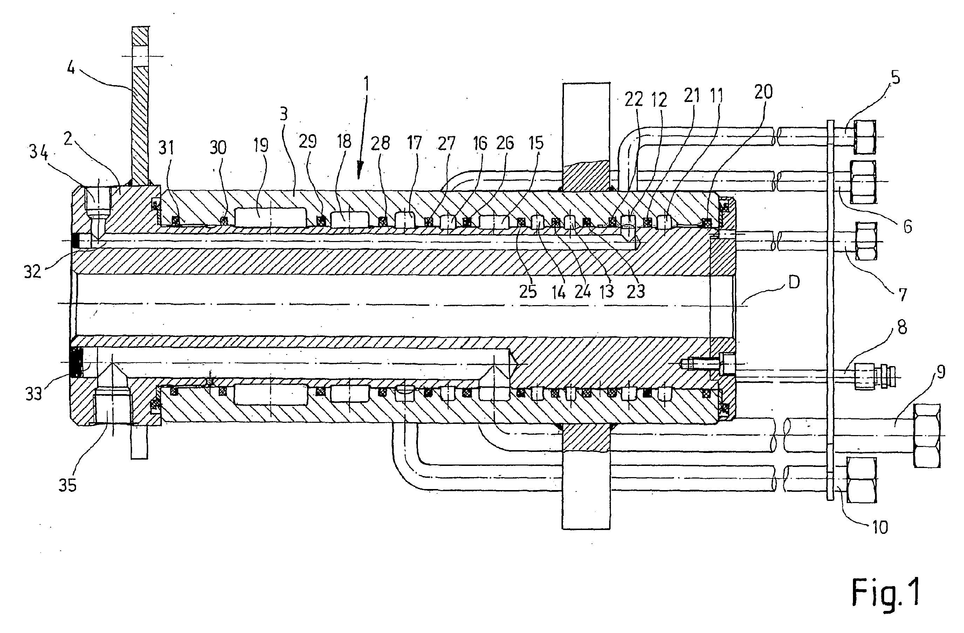

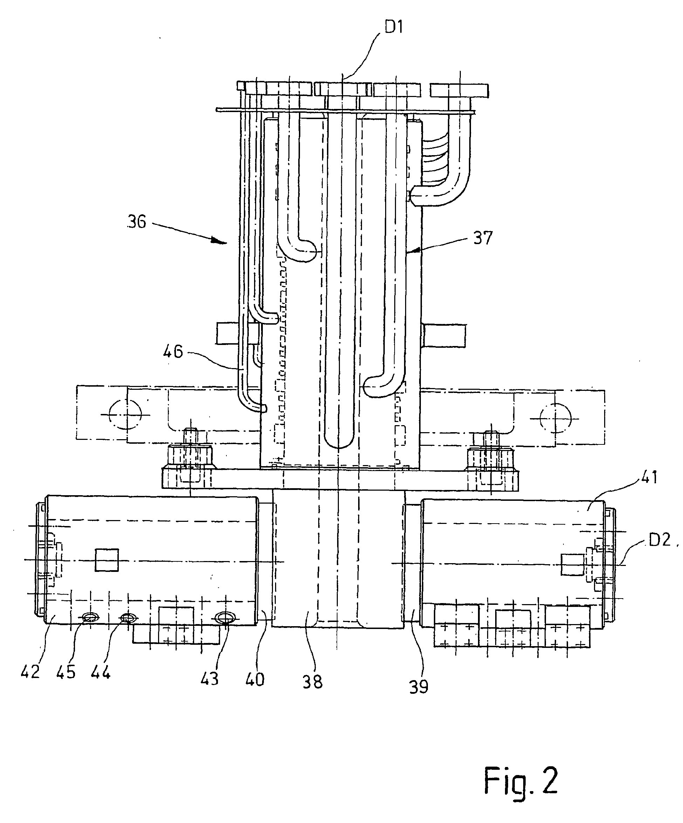

Figur 2 zeigt nun eine erfindungsgemäße Drehdurchführung 36 mit einem ersten Rotor 37 und einem Stator 38, wobei der erste Rotor 37 sowie der im Bereich des ersten Rotors 37 befindliche Teil des Stators 38 dem anhand von Figur 1 beschriebenen Aufbau einer Drehdurchführung entspricht.

Nunmehr weist der Stator 38 zwei Fortsätze 39, 40 auf, die sich quer zur Drehachse D₁ beidseits des Stators 38 nach außen hin erstrecken. Auf die Fortsätze 39, 40 sind ein zweiter Rotor 41 sowie ein dritter Rotor 42 aufgeschoben.

Die Fortsätze 39, 40 des Stators 38 weisen entsprechend dem Aufbau der Drehdurchführung gemäß Figur 1 achsenparallele Bohrungen (nicht näher dargestellt) bezüglich der Drehachse D₂ auf, die mit achsenparallelen Kanälen (ebenfalls nicht näher dargestellt) in Bezug zur Drehachse D₁ verbunden sind. Die im Bereich des ersten Rotors 37 im Stator angebrachten zur Drehachse D₁ achsenparallelen Kanäle verzweigen gewissermaßen in die beiden Fortsätze 39, 40 in die Bereiche des zweiten Rotors 41 und des dritten Rotors 42.

Dort wiederum findet in einer entsprechenden Weise, wie anhand der Drehdurchführung gemäß Figur 1 dargestellt, die Leitungsführung über Ringnuten nach außen statt, die in der vorliegenden Ausführungsform in die Rotoren 41, 42 eingearbeitet sind. Die Anschlüsse können über radiale Anschlussöffnungen des zweiten bzw. dritten Rotors 41, 42 vorgenommen werden. Drei solcher Anschlussöffnungen 43 sind beispielhaft am dritten Rotor 42 eingezeichnet. Die Anschlüsse können in geeigneter weise, beispielsweise über Flanschverbindungen oder Einschraubgewinde hergestellt werden.

Eine erfindungsgemäße Drehdurchführung erlaubt das Verdrehen der beiderseitigen Anschlüsse um zwei Drehachsen D₁, D₂. Ist beispielsweise der Anschluss 46 des ersten Rotors 37 mit der Anschlussöffnung 44 des dritten Rotors 42 verbunden, so ist anhand des dargestellten Ausführungsbeispiels sofort erkennbar, dass die Anschlussöffnung 44 gegenüber dem Anschluss 46 sowohl um die Drehachse D₁ als auch um die Drehachse D₂ verdrehbar ist.

Die Anordnung des zweiten und dritten Rotors 41, 42 beidseits des Stators 38 ergibt eine T- oder Kreuz-Form, so dass der Schwerpunkt der Drehdurchführung 36 in der Nähe der Drehachse D₁ liegt. Abweichungen hiervon ergeben sich durch die unterschiedliche Ausbildung des zweiten bzw. dritten Rotors 41, 42 sowie der zugehörigen Statorteile.

Die erfindungsgemäße Drehdurchführung ist beispielsweise bei einem geländegängigen Fahrzeug mit Hydraulikantrieb einsetzbar, dessen Vorderteil bezüglich dem Hinterteil um die Drehachse D₂ schwenken kann, wobei das Vorderteil und das Hinterteil eines solchen Fahrzeugs oder deren Laufradachsen zugleich um die Drehachse D₁ verschränkbar ist. Es kann somit mit einer Drehdurchführung 36 der dargestellten Art ein geländegängiges Fahrzeug mit Hydraulikantrieb geschaffen werden, da es auch in einem extrem kupierten Gelände der Bodenkontur folgen kann, ohne dass das Fahrzeug zwischen den Achsen aufliegt oder die Laufräder die Bodenhaftung verlieren.

Die Drehdurchführung 36 kann hierbei ebenso wie die Drehdurchführung 1 nicht nur zum Durchführen von Hydraulikleitungen, sondern zugleich von weiteren Fluidleitungen, beispielsweise Treibstoffleitungen, Druckluftleitungen, etc. Verwendung finden. Das komplette Fluidsystem einer Maschine bzw. eines Fahrzeugs kann durch solche Mehrfachdrehdurchführungen geleitet werden.

### Bezugszeichenliste:

- 1: Drehdurchführung
- 2: Stator
- 3: Rotor
- 4: Flansch
- 5: Anschluss
- 6: Anschluss
- 7: Anschluss
- 8: Anschluss
- 9: Anschluss
- 10: Anschluss
- 11: Ringnut
- 12: Ringnut
- 13: Ringnut
- 14: Ringnut
- 15: Ringnut
- 16: Ringnut
- 17: Ringnut
- 18: Ringnut
- 19: Ringnut
- 20: Dichtung
- 21: Dichtung
- 22: Dichtung
- 23: Dichtung
- 24: Dichtung
- 25: Dichtung
- 26: Dichtung
- 27: Dichtung
- 28: Dichtung
- 29: Dichtung
- 30: Dichtung
- 31: Dichtung
- 32: achsenparallele Bohrung
- 33: achsenparallele Bohrung
- 34: Radialbohrung
- 35: Radialbohrung
- 36: Drehdurchführung
- 37: erster Rotor
- 38: Stator
- 39: Fortsatz
- 40: Fortsatz
- 41: zweiter Rotor
- 42: dritter Rotor
- 43: Anschlüssöffnung
- 44: Anschlussöffnung
- 45: Anschlussöffnung
- 46: Anschluss

## Patentansprüche

1. Drehdurchführung (36) für ein Fluidsystem für ein Hydrauliksystem mit einem ersten, als erster Rotor (37) bezeichneten Drehelement und einem zweiten, als Stator (38) bezeichneten Drehelement, die wenigstens teilweise zueinander koaxial und um eine ersten Drehachse D₁ drehbar angeordnet sind, **dadurch gekennzeichnet, dass** ein drittes, als zweiter Rotor (41) bezeichnetes Drehelement wenigstens teilweise zu einem Teil (39) des Stators (38) koaxial und zu diesem um eine zweite, von der ersten Drehachse D₁ verschiedene zweite Drehachse D₂ drehbar angeordnet ist.

2. Drehdurchführung nach Anspruch 1, **dadurch gekennzeichnet, dass** der Stator (38) mehrteilig ist.

3. Drehdurchführung nach einem der vorgenannten Ansprüche, **dadurch gekennzeichnet, dass** eine druckdichte Flanschverbindung zwischen verschiedenen Statorteilen vorgesehen ist.

4. Drehdurchführung nach einem der vorgenannten Ansprüche, **dadurch gekennzeichnet, dass** der erste und/oder weitere Rotoren (37, 41, 42) wenigstens teilweise hülsenförmig ausgebildet sind und einen entsprechenden Teil des Stators (38) umschließen.

5. Drehdurchführung nach einem der vorgenannten Ansprüche, **dadurch gekennzeichnet, dass** ein dritter Rotor (42) vorgesehen ist.

6. Drehdurchführung nach einem der vorgenannten Ansprüche, **dadurch gekennzeichnet, dass** der dritte Rotor (42) ebenfalls um die zweite Drehachse D₂ des zweiten Rotors (41) drehbar angeordnet ist.

7. Drehdurchführung nach einem der vorgenannten Ansprüche, **dadurch gekennzeichnet, dass** der zweite und der dritte Rotor (41, 42) beidseits des Stators (38) angeordnet sind, so dass sich eine T- bzw. Kreuzform der Drehdurchführung (36) ergibt.

8. Drehdurchführung nach einem der vorgenannten Ansprüche, **dadurch gekennzeichnet, dass** eine Leckfluidrückführung in der Drehdurchführung vorgesehen ist.

9. Drehdurchführung nach einem der vorgenannten Ansprüche, **dadurch gekennzeichnet, dass** die Leckfluidrückführung zwischen einer Hochdruckleitung und dem Außenbereich der Drehdurchführung angeordnet ist.

10. Maschine mit einem Fluidsystem, **dadurch gekennzeichnet, dass** eine Drehdurchführung nach einem der Ansprüche 1 bis 9 vorgesehen ist.

11. Fahrzeug mit Fluidsystem, **dadurch gekennzeichnet, dass** eine Drehdurchführung nach einem der Ansprüche 1 bis 9 vorgesehen ist.

## Claims

1. A rotary transmission leadthrough (36) for a fluid system for a hydraulic system, having a first rotary element designated as the first rotor (37) and a second rotary element designated as the stator (38), which rotary elements are arranged at least partly coaxially to one another and so as to be rotatable about a first rotation axis D₁, **characterised in that** a third rotary element designated as second rotor (41) is arranged at least partly coaxially to one part (39) of the stator (38) and so as to be rotatable relative to the latter about a second rotation axis D₂ different from the first rotation axis D₁.

2. The rotary transmission leadthrough according to claim 1, **characterised in that** the stator (38) consists of multiple parts.

3. The rotary transmission leadthrough according to one of the preceding claims, **characterised in that** a pressure-tight flange connection is provided between different stator parts.

4. The rotary transmission leadthrough according to one of the preceding claims, **characterised in that** the first and/or additional rotors (37, 41, 42) are designed at least partly to have a sleeve shape and enclose a corresponding part of the stator (38).

5. The rotary transmission leadthrough according to one of the preceding claims, **characterised in that** a third rotor (42) is provided.

6. The rotary transmission leadthrough according to one of the preceding claims, **characterised in that** the third rotor (42) is also arranged so as to be rotatable about the second rotation axis D₂ of the second rotor (41).

7. The rotary transmission leadthrough according to one of the preceding claims, **characterised in that** the second and the third rotor (41, 42) are arranged on both sides of the stator (38), so that a T-shape or cross shape of the rotary transmission leadthrough (36) is obtained.

8. The rotary transmission leadthrough according to one of the preceding claims, **characterised In that** a leakage-fluid return is provided in the rotary transmission leadthrough.

9. The rotary transmission leadthrough according to one of the preceding claims, **characterised in that** the leakage-fluid return is arranged between a high-pressure line and the outer region of the rotary transmission leadthrough.

10. A machine comprising a fluid system, **characterised in that** a rotary transmission leadthrough according to one of claims 1 to 9 is provided.

11. A vehicle comprising a fluid system, **characterised In that** a rotary transmission leadthrough according to one of claims 1 to 9 is provided.

## Revendications

1. Passage tournant (36) pour le système fluidique d'un système hydraulique comportant un premier élément tournant désigné en tant que premier rotor (37) et un deuxième élément tournant désigné en tant que stator (38), lesquels sont agencés au moins partiellement de manière coaxiale l'un par rapport à l'autre et de manière rotative autour d'un premier axe de rotation D,
**caractérisé en ce qu'**un troisième élément tournant désigné en tant que deuxième rotor (41) est agencé au moins partiellement de manière coaxiale par rapport à une partie (39) du stator (38) et de manière rotative par rapport à celui-ci autour d'un second axe de rotation D₂ différent du premier axe de rotation D₁.

2. Passage tournant selon la revendication 1,
**caractérisé en ce que** le stator (38) est composé de plusieurs parties.

3. Passage tournant selon l'une des revendications précédentes, **caractérisé en ce qu'**il est prévu une liaison à bride tenant à la pression entre les différentes parties de stator.

4. Passage tournant selon l'une des revendications précédentes, **caractérisé en ce que** le premier et/ou les autres rotors (37, 41, 42) sont réalisés au moins partiellement en forme de manchons et entourent une partie correspondante du stator (38).

5. Passage tournant selon l'une des revendications précédentes, **caractérisé en ce qu'**il est prévu un troisième rotor (42).

6. Passage tournant selon l'une des revendications précédentes, **caractérisé en ce que** le troisième rotor (42) est également agencé de manière rotative autour du second axe de rotation D₂ du deuxième rotor (41).

7. Passage tournant selon l'une des revendications précédentes, **caractérisé en ce que** le deuxième rotor (41) et le troisième rotor (42) sont agencés des deux côtés du stator (38), de sorte qu'il en résulte un passage tournant (36) en forme de T ou de croix.

8. Passage tournant selon l'une des revendications précédentes, **caractérisé en ce qu'**il est prévu dans le passage tournant un retour de fluide de fuite.

9. Passage tournant selon l'une des revendications précédentes, **caractérisé en ce que** le retour de fluide de fuite est agencé entre une conduite à haute pression et la zone extérieure du passage tournant.

10. Machine comportant un système fluidique,
**caractérisée en ce qu'**il est prévu un passage tournant selon l'une des revendications 1 à 9.

11. Véhicule comportant un système fluidique,
**caractérisé en ce qu'**il est prévu un passage tournant selon l'une des revendications 1 à 9.
